# EUROPEAN PATENT APPLICATION

(11) **EP 2 747 017 A1**
(43) Date of publication of application: **25.06.2014**
(21) Application number: 12199300.0
(22) Date of filing: 21.12.2012
(51) Int. Cl.: G06Q 20/32

(54) **System providing wireless network access responsive to completed transaction payment and related methods**

(71) Applicant: BlackBerry Limited, Waterloo, ON N2K 0A7 (CA)
(72) Inventor: Lau, Stephen, Kanata, Ontario K2K 3K1 (CA); Wood, Christopher William, Kanata, Ontario K2K 3K1 (CA)
(74) Representative: Greenaway, Martin William

(57) **Abstract**

A system includes a payment terminal and a mobile communications device capable of completing at least one electronic payment transaction with the payment terminal via near field communication (NFC). The payment terminal is capable of transferring password data to the mobile communications device for accessing a wireless network responsive to completion of the at least one electronic payment transaction.

## Description

### Technical Field

This application relates to the field of communications, and more particularly, to mobile wireless communications systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile communications devices. This short-range high frequency wireless communications technology exchanges data between devices over a short distance, such as only a few centimeters.

### Brief Description of the Drawings

FIG. 1 is a schematic block diagram of an example system which may provide wireless network access responsive to a completed transaction(s) payment.

FIG. 2 is a front view of an example mobile communications device which may be used with the system of FIG. 1.

FIG. 3 is a front view of a display which may be used with the payment terminal of the system of FIG. 1.

FIG. 4 is a flow diagram illustrating method aspects associated with the system of FIG. 1.

FIG. 5 is a schematic block diagram illustrating example components of a mobile communications device which may be used in accordance with example embodiments.

### Detailed Description

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicated similar elements or steps in different embodiments.

Generally speaking, a system is set forth herein which may include a payment terminal, and a mobile communications device capable of completing at least one electronic payment transaction with the payment terminal via near field communication (NFC). The payment terminal may be capable of transferring password data to the mobile communications device for accessing a wireless network responsive to completion of the at least one electronic payment transaction. As such, access to the wireless network may be conditioned upon one or more completed payment transactions.

By way of example, the payment terminal may be capable of transferring the password data to the mobile communications device via NFC, a quick response (QR) code, Bluetooth, etc. Furthermore, the mobile communications device may have a unique address associated therewith, and the payment terminal may be capable of storing the unique address from the mobile communications device. Moreover, the system may also include a wireless access point capable of providing access to the wireless network based upon receiving the password data from the mobile communications device and based upon the unique address stored by the payment terminal. The unique address may include a Media Access Control (MAC) address, for example. Also by way of example, the wireless access device may be capable of tracking wireless network resource usage by the mobile communications device based upon the unique address.

The password data may have an expiration period associated therewith. Furthermore, the wireless network may be a wireless local area network (WLAN), for example.

A related method may include completing at least one electronic payment transaction between a mobile communications device and a payment terminal via near field communication (NFC). The method may further include transferring password data from the payment terminal to the mobile communications device for accessing a wireless network responsive to completion of the at least one electronic payment transaction.

A related non-transitory computer-readable medium is also provided which may have computer-executable instructions for causing a payment terminal to perform steps including completing at least one electronic payment transaction with a mobile communications device via near field communication (NFC). A further step may include transferring password data to the mobile communications device for accessing a wireless network responsive to completion of the at least one electronic payment transaction.

By way of background, time sensitive passwords are sometimes used for logging on to computer networks, such as wireless local area network (WLAN) systems (a.k.a. Wi-Fi). Typically, a user is required to first obtain a password, and then enter it into the device being used to access the network. This approach may be problematic in several ways. For example, users may forget the password, or they may write it down and have it stolen. A user may also tell the password to a non-authorized user, who would then be able to take advantage of network resources.

Physical security may be a good way to help keep computer systems or networks from being accessed without authorization, but this becomes more difficult with the increasing use of Wi-Fi in many network settings. For example, if someone only had access to a "hard wired" LAN network within a building, a person outside the building would not have a way to access the LAN network. However, Wi-Fi is often used to provide authorized users the freedom to move throughout the building, but this potentially opens up network access to those outside the building. With typical Wi-Fi encryption techniques, it may otherwise be difficult for someone outside to break into the system without knowing the password. However, because of the above-noted drawbacks of password usage (e.g., difficulty for users to type or remember, etc.), trivial or relatively insecure (e.g., not adequately guarded) passwords are often used, or they are shared with non-authorized persons, thus making the network less secure.

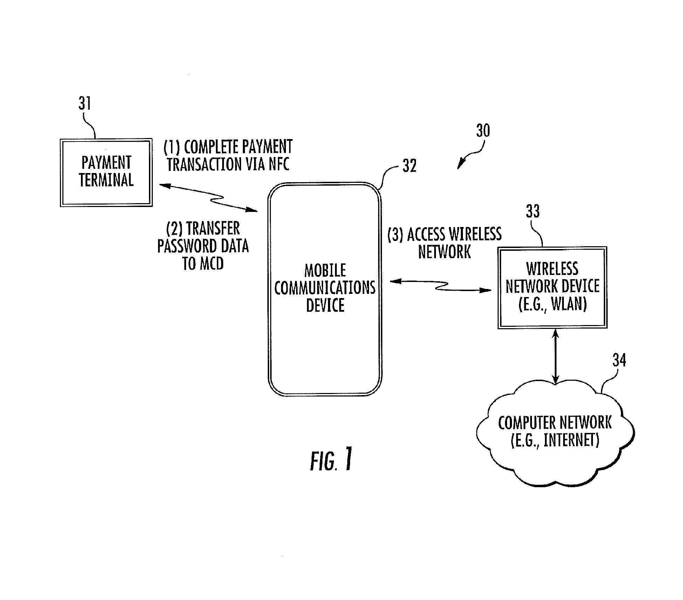

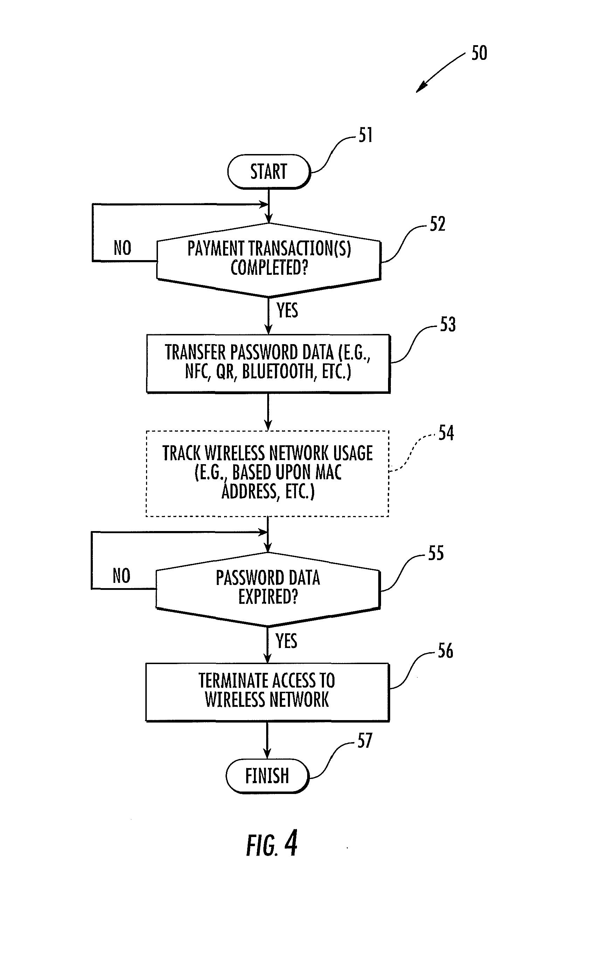

Referring now to FIG. 1 and the flow diagram **50** of FIG. 4, a system **30** and related method aspects are first described. The system **30** illustratively includes a payment terminal **31,** which may be capable of, or configured to perform a payment transaction with one or more mobile communications devices **32** (also referred to as a "mobile device" herein) via near field communication (NFC). Example mobile devices **35** may include NFC-enabled portable or personal media players (e.g., music or MP3 players, video players, etc.), portable gaming devices, portable or mobile telephones, smartphones, tablet computers, laptop computers, digital cameras, etc. Example payment terminals **31** may include NFC-enabled cash registers, self-payment checkout stations, etc., such as may be found in a store, restaurant, or hotel, for example. Other suitable devices may also be used.

NFC is a short-range wireless communications technology in which NFC-enabled devices are "tapped," "bumped" or otherwise moved in close proximity to communicate. In one non-limiting example implementation, NFC may operate at 13.56 MHz and with an effective range of several centimeters (typically up to about 4 cm, or up to about 10 cm, depending upon the given implementation), but other suitable versions of near field communication which may have different operating frequencies, effective ranges, etc., for example, may also be used.

Beginning at Block **51,** the mobile device **32** may be capable of, or configured to, completing one or more electronic payment transactions with the payment terminal **31** via NFC, such as the purchase of a product or service. The payment terminal **31** may be capable of transferring password data to the mobile device **31** for accessing a network, such as by providing access to a wireless local area network (WLAN) device **33** (e.g., a wireless access point, router, modem, or combination thereof) which may in turn provide access to a communications network **34** such as the Internet, etc. However, such access may be provided responsive to completion of the payment transaction(s), at Blocks **52-53.**

This approach may advantageously help to ensure that only authorized users with physical access to the building or premises will receive the password data for accessing the wireless network device **33.** Moreover, the above-described approach may also allow the password data to be shared without the user actually knowing the password, which may help maintain the security of the password. More particularly, this may allow for relatively complex passwords to be used, which not only provides for enhanced security, but also may make it more difficult to share with unauthorized users. Accordingly, this approach may further help ensure that only paying customers are granted access to network resources in public locations such as stores, restaurants, or hotels for example.

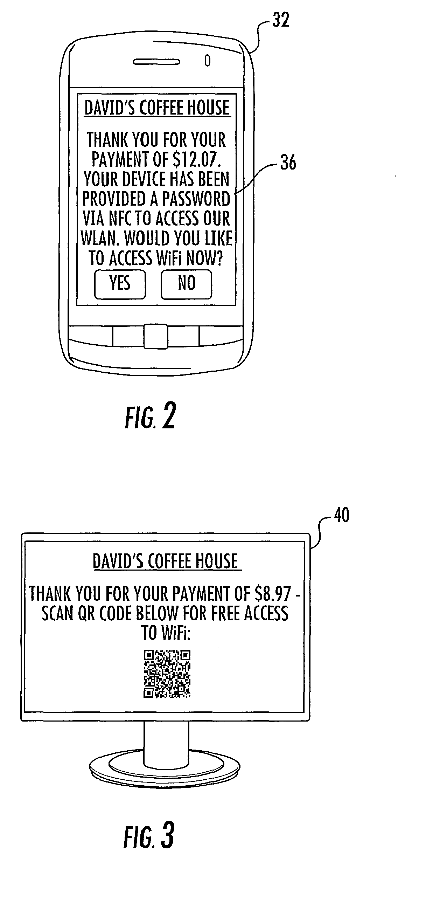

Yet, the password data may be passed from the payment terminal **31** to the mobile device **32** in such a way that it helps prevent the user from having to manually type in the password. The password data does not have to be entered manually via an input device (e.g., physical or virtual keypad). In the example shown in FIG. 2, the password data is transferred to the mobile device **32** via NFC. More particularly, in this example the mobile device **32** has been used to perform an electronic payment transaction at "David's Coffee House" in the amount of $12.07, to purchase, for example, food and beverage items. An electronic receipt or acknowledgement is provided to the mobile device **32,** which is shown on a display **36** thereof, advising the user of the mobile device that the payment of $12.07 has been received and the transaction is complete. Moreover, the user is also advised that, as a result of the completed transaction, a password has been transferred to the mobile device **32** via NFC. That is, the password data is provided as part of or along with the receipt for the NFC transaction. In the illustrated example, prompts are also provided on the display **36** for the user to indicate "yes" or "no" as to whether the mobile device **32** should proceed to log-in to the WLAN at the store using the password data.

More particularly, a mobile payment application running on the mobile device **32** for performing the transaction may be capable of making a call to the operating system or wireless (e.g., WLAN) transceiver of the mobile device to initiate a wireless connection to the wireless network device **33** using the password data provided via NFC after completion of the transaction. That is, the password data may be automatically provided to the WLAN transceiver via the operating system for communication to the wireless network device **33** via a URI string, etc. Thus, a Wi-Fi setup application may be launched with embedded password data, so that the password data does not have to be manually entered by the user. Other details regarding the network or wireless network device (e.g., network IP addresses, encryption types, etc.) may be communicated to the mobile device **32** in a similar fashion to the password data, although such data may also be separately gathered through wireless network discovery procedures, for example.

The above-noted approach may advantageously allow passwords to be more securely transferred from the payment terminal **31** to the mobile device **32.** More particularly, by transferring the password via NFC, such as in an NFC data exchange format (NDEF) record, for example, this helps ensure that only mobile devices with physical access to the payment terminal **31** and which actually complete a transaction(s) with the payment terminal will receive the password data for accessing the wireless network device **33.** Moreover, since the password may be hidden to the user, or otherwise provided in a non-human-readable form, it may be difficult for a user to decipher and share the password with an unauthorized user. In an example embodiment, tapping of the mobile device **32** to the physical hardware NFC reader associated with the payment terminal **31** may initiate an automatic password transfer responsive to completion of a payment transaction. As noted above, the password may be made relatively complex so that it would be difficult to crack via guessing, dictionary attacks, or brute force (e.g., relatively complex passwords may include pseudo-random characters and be relatively long).

In accordance with a further example now described with reference to FIG. 3, another approach by which the password data may be transferred to the mobile device **32** upon completion of the payment transaction is by a visual indicator, such as a bar code or quick response (QR) code that is to be displayed on a display **40** associated with or coupled to the payment terminal **31.** In the example of FIG. 3, a message is displayed on the display **40** indicating that a transaction for $8.97 has been completed, and that a displayed QR code may be scanned to obtain free Wi-Fi access. In this way, an image sensor (e.g., charge coupled device or CCD) of the mobile device **32** may be used to capture the image of the QR code using a QR reader application, for example, which may be used to decipher the password data incorporated within the QR representation. Similar types of password data to that described above with respect to FIG. 2 may also be incorporated in QR codes, for example. Another communications format which may be used for transferring the password data may include Bluetooth, for example.

Furthermore, the mobile device **32** may have a unique address associated therewith, such as a MAC address, and the payment terminal **31** may be capable of storing the unique address from the mobile communications device. The unique address of the mobile device **32** may be used for different purposes, one of which is to optionally track the usage of network resources (e.g., time used, amount of data downloaded, etc.) by various users, at Block **54.** Moreover, this may also be used in conjunction with the password data to further confirm that a given device is authorized to access the network to provide further security. That is, the wireless network device **33** may check to see that a unique address received from a mobile device attempting to access the wireless network device **33** is on the stored list of authorized devices that completed a payment transaction(s). In some instances, the password data provided to a given mobile device **32** may also be unique, such that the unique address of the mobile device may be matched with the unique password provided to the mobile device to provide a still further level of security against unauthorized use.

Additionally, in some embodiments the password data may have an expiration associated therewith. That is, the wireless network device **33** may only allow access to a given password for a certain amount of time. For example, the password for network access may be changed on a periodic basis (e.g., once a day, etc.). Another approach is that a timestamp may be generated when the password is provided to the mobile device **32,** so that after a certain amount of time (e.g., an hour, day, etc.) network access will no longer be provided. Upon expiration of the password data or time period for which the password data is valid, access to the network may be terminated, at Blocks **55-56.** In some embodiments, a message may be provided to the mobile device **32** alerting the user that additional network access time may be obtained responsive to an additional payment transaction, if desired. The method of FIG. 4 illustratively concludes at Block **57.**

In some embodiments, different access privileges may be given to different users as part of the password exchange. For example, different mobile devices **32** may be given different lengths of access time. More particularly, the larger the purchase or size of the financial transaction performed, the longer the access time which may be provided to the given user. In addition, in some embodiments multiple payment transactions may be required to earn the network access, or a threshold amount may be set for the payment transaction which is to be reached (in one or more transactions) before network access is earned.

In accordance with another example, the payment terminal may allow multiple mobile communications devices **32** to be authorized for network access and provided with the password data. For example, a user paying for coffee at a coffee shop may have both a mobile phone, which is used to conduct the payment transaction, but wishes to access Wi-Fi with a secondary mobile device (e.g., a laptop or tablet computer) while in the coffee shop drinking the coffee. The payment terminal may be capable of or configured to transfer the password data to both of the mobile phone and the tablet or laptop, so that the user is able to access Wi-Fi with either device. In some embodiments, a limit may be set on how many devices may be provided with the password for a given transaction (e.g., two devices per transaction, etc.).

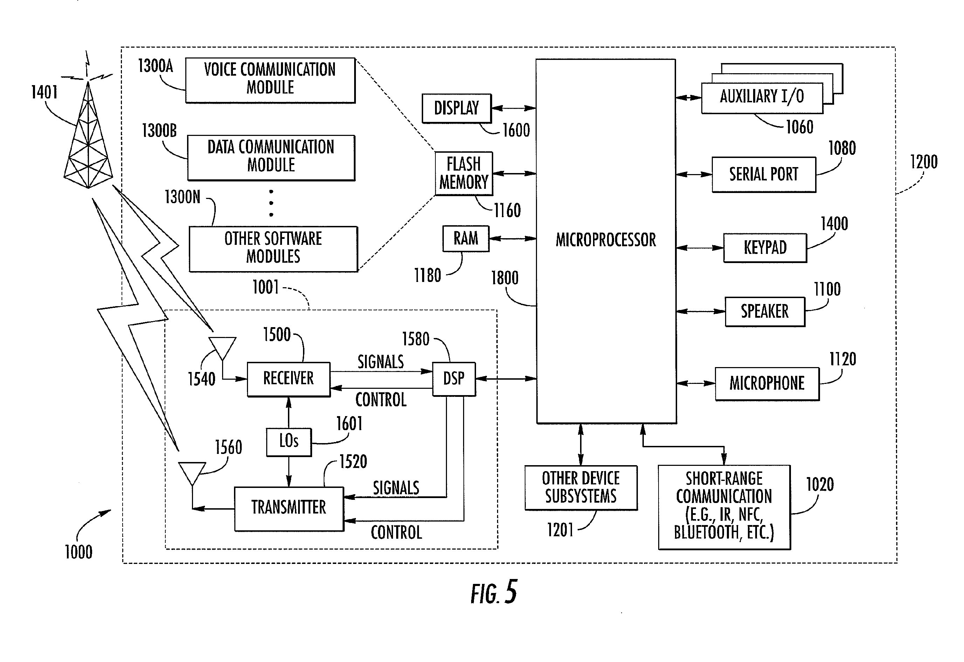

Example components of a mobile device **1000** that may be used in accordance with the above-described embodiments are further described below with reference to FIG. 5. The device **1000** illustratively includes a housing **1200,** a keyboard or keypad **1400** and an output device **1600.** The output device shown is a display **1600,** which may include a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 5. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may include a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, LTE, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A system including:
a payment terminal; and
a mobile communications device capable of completing at least one electronic payment transaction with the payment terminal via near field communication (NFC);
the payment terminal being capable of transferring password data to the mobile communications device for accessing a wireless network responsive to completion of the at least one electronic payment transaction.

2. The system of Claim 1 wherein the payment terminal is capable of transferring the password data to the mobile communications device via NFC.

3. The system of Claim 1 wherein the payment terminal is capable of transferring the password data to the mobile communications device via a quick response (QR) code.

4. The system of Claim 1 wherein the payment terminal is capable of transferring the password data to the mobile communications device via a Bluetooth connection.

5. The system of Claim 1 wherein the mobile communications device has a unique address associated therewith; wherein the payment terminal is capable of storing the unique address from the mobile communications device; and further including a wireless access point capable of providing access to the wireless network based upon receiving the password data from the mobile communications device and based upon the unique address stored by the payment terminal.

6. The system of Claim 5 wherein the unique address includes a Media Access Control (MAC) address.

7. The system of Claim 5 wherein the wireless access device is capable of tracking wireless network resource usage by the mobile communications device based upon the unique address.

8. The system of Claim 1 wherein the password data has an expiration period associated therewith.

9. The system of Claim 1 wherein the wireless network includes a wireless local area network (WLAN).

10. A method including:
completing at least one electronic payment transaction between a mobile communications device and a payment terminal via near field communication (NFC); and
transferring password data from the payment terminal to the mobile communications device for accessing a wireless network responsive to completion of the at least one electronic payment transaction.

11. The method of Claim 10 wherein transferring includes transferring the password data to the mobile communications device via NFC.

12. The method of Claim 10 wherein transferring includes transferring the password data to the mobile communications device via a quick response (QR) code.

13. The method of Claim 10 wherein the mobile communications device has a unique address associated therewith; and further including:
storing the unique address from the mobile communications device; and
providing access to the wireless network using a wireless access device based upon receiving the password data from the mobile communications device and based upon the unique address stored by the payment terminal.

14. The method of Claim 13 wherein the unique address includes a Media Access Control (MAC) address.

15. The method of Claim 13 further including using the wireless access device to track wireless network resource usage by the mobile communications device based upon the unique address.
